# EUROPEAN PATENT APPLICATION

(11) **EP 4 679 230 A1**
(43) Date of publication of application: **14.01.2026**
(21) Application number: 24306169.4
(22) Date of filing: 11.07.2024
(51) Int. Cl.: G06F 1/329, G06F 9/50, G06F 1/324, G06F 1/3296

(54) **ADAPTATIVE POWER CAPPING IN A HIGH-PERFORMANCE COMPUTER**

(71) Applicant: BULL SAS, 78340 Les Clayes-Sous-Bois (FR)
(72) Inventor: STOFFEL, MATHIEU, 67560 Rosheim (FR)
(74) Representative: Cabinet Camus Lebkiri

(57) **Abstract**

According to an aspect of the invention, it is provided a computer implemented method for capping the power consumption of a high-performance computer comprising a plurality of nodes, the plurality of nodes comprising a first group of nodes of which each node is allocated to a first job, the power capping of each node of the first group of nodes being enforced to a first capping value being dependent on the type of the first job.

## Description

### TECHNICAL FIELD

The technical field of the invention is the one of high-performance computing.

The present invention concerns a method for capping the power consumption of a high-performance computer, and a related high-performance computer.

### BACKGROUND OF THE INVENTION

Enforcing a power capping on components of a High-Performance Computer (HPC) is a common way to limit the overall power consumption of said HPC. This mechanism is particularly efficient, especially in the case of nowadays and future exascale supercomputers, to mitigate power shortages and the rising energy costs, as these downsides prevent from operating the HPC at its peak levels of performance on a daily basis.

For example, known features of power capping are:
- Power capping rules that can be activated or deactivated, either automatically or manually, depending on the circumstances under which the HPC is being operated;
- A power budget assigned to a group of components, which is then automatically translated into a set of individual capping rules for these components, with a fair distribution of the power budget between the latter (e.g., as a percentage of their nominal power consumption);
- Experimentally determining a low power cap value for each component, i.e., the strongest power constraint applicable that still allows said component to operate and be responsive.

The power capping is usually applied to the computing elements of each node of the HPC, such as the processors and/or accelerators (i.e., Graphics Processing Unit (GPU), Field Programmable Gate Array (FPGA), etc.), but can also be applied to any component of the nodes of the HPC, as long as said component is adapted to allow a power capping on it.

One drawback of power capping is that it has a significant impact on the level of performance of the HPC: the lower the power cap in Watts (i.e., the more constraining the power cap), the greater the reduction of the computing power of the HPC. The enforcement of a power capping is then at odds with the main aim of HPC to reaching the highest possible job throughput.

Some known techniques rely on modifying the power capping between nodes that are running a same job (for instance Jonathan Eastep et al., Global Extensible Open Power Manager: A Vehicle for HPC Community Collaboration on Co-Designed Energy Management Solutions, High Performance Computing: 32nd International Conference, ISC High Performance 2017, June 2017, pp. 394-412, and Neha Gholkar et al., PShifter: feedback-based dynamic power shifting within HPC jobs for performance, HPDC '18: Proceedings of the 27th International Symposium on High-Performance Parallel and Distributed Computing, June 2018, pp. 106-117), based on the observation that a distributed and concurrent application (e.g. MPI-based) tends to be only as fast as its slowest node. The power capping is then adjusted within nodes running a same job, in order to mitigate the performance penalty caused by the enforced power capping on this job. However, these approaches fail at coordinating power capping adjustment at the scale of a managed partition when different jobs are running.

There is then a need for a mechanism, operating at the level of a partition of nodes (i.e., a plurality of nodes running different jobs), to compensate for the performance degradation of the execution of an HPC application induced by the enforcement of a power cap.

### SUMMARY OF THE INVENTION

An object of the invention is to provide a mechanism that assigns a power cap that is dependent on the type of job that is submitted to the HPC. The type of a job indicates whether said job mainly relies on memory resources, computing resources, or both memory and computing resources. The presented mechanism is also able to adapt the power cap already assigned to some other nodes and/or their components, so that the overall HPC power consumption does not exceed a given power budget.

To this end, according to a first aspect of the invention, it is provided a computer implemented method for capping the power consumption of a high-performance computer, the high-performance computer comprising a plurality of nodes, each node of the plurality of nodes having a power capping at a predefined capping value, a sum of the respective predefined capping values of every node of the plurality of nodes being inferior to a predefined threshold, the plurality of nodes comprising a first group of nodes, each node of the first group of nodes being allocated to a first job, the method comprising:
- Obtaining a first label associated with the first job, said first label indicating a type of the first job, the first job type being one of a memory-type job, a compute-type job or a mixed-type job;
- Determining a first capping value based on the obtained label, the first capping value being equal to a predefined value dependent on the type of the first job indicated by the label;
- Commanding a capping enforcement of the power supplied to each node of the first group of nodes, the power capping being enforced to the determined first capping value for each node of the first group of nodes.

By "capping" is conventionally meant the definition and enforcement of a threshold regarding the power consumption of an electrical device, in the present case one or more nodes of an HPC, and thus the whole HPC itself. HPC herein refers to a High-Performance Computer.

By "predefined capping value" is meant a value of power capping that has been defined prior to the implementation of the method. This predefined capping value can have been predefined via a previous implementation of the method, by an administrator of the HPC or a user (i.e., someone requesting a job to be executed by the HPC), or more generally via any manual or automatic technique adapted to predefine this value. As an example, the predefined capping value can correspond to an "initial capping value" which is a power capping value that is set as a default value for every node of the HPC, for example at the start of the HPC and until a further modification by the implementation of the method or via another technique. The initial capping value can be the same for every node of the HPC.

The terminology "predefined threshold" corresponds to a maximum amount of power that can be used by the whole HPC to operate. This threshold can be predefined by any technique, under any constraint, for example it can be set based on the power provided by the power service provider, the currently available power amount, the consumption of other instruments besides the HPC, rules defined by the operator of the HPC, etc. In other words, the predefined threshold corresponds to the maximum power that the HPC is allowed to use to operate, which means that the sum of every power capping value that is defined and enforced to every node must comply with this threshold (i.e., this sum must be inferior to this predefined threshold).

By "label" is meant any kind of data that indicates which job type the first job belongs to. The job type is a category that comprises at least three job types:
- Memory-type jobs, also called memory-bound jobs, are jobs for which the performance is, for most, limited by the memory bandwidth, as they mostly require memory resources (such as volatile and/or non-volatile memories) to operate. This means that a node running a memory-type job will see its computing resources (e.g., its processor and/or accelerator) have stalling times (of significant amount of time, in most cases), waiting for data to be fetched from the memory to the registers of the processor. Memory-type jobs are less power-consuming than other types of jobs because they do not rely as much on computing resources. In the context of the invention, memory-type jobs are considered the least power consuming jobs;
- Compute-type jobs, also called compute-bound jobs, are jobs that mostly, not to say extensively, rely on the computing resources of the nodes they are allocated to. The performance of a compute-type job is then, for most, limited by the computing-resources specifications of its allocated nodes. As the computing resources of a node are the most power demanding resources, compute-type jobs require more power than memory-type jobs to be carried out. In the context of the invention, compute-type jobs are considered the most power consuming jobs;
- Mixed-type jobs, which are jobs that both require the use of memory resources and computing resources, but to a lesser extent than what compute-type jobs would need, and more than a memory-type job would require. The performance of a mixed-type job is then both limited by the specifications of the memory resources and the computing resources of its allocated nodes, in a lesser way than memory-type jobs and compute-type jobs, respectively. In the context of the invention, mixed-type jobs are considered more power consuming than memory-type jobs and less power consuming than compute-type jobs.

By "predefined value dependent on the type of a job" is meant that this predefined value corresponds to one of the job types above listed. As such, the first capping value is equal to the predefined value that relates to the job type of the first job. The predefined value can be predefined, i.e., defined prior the implementation of the method, in any way, regardless of the technique, be it manually or automatically. For example, the predefined values can be predefined by the operator of the HPC, based on his knowledge and experience regarding HPCs, or can be obtained using any model, such as a stochastic model built on data collected during previous executions of jobs similar to the first job.

Thanks to the invention, it is possible to enforce a smart power capping of the nodes of the HPC that are allocated to a to be executed job. The proposed method resides on leveraging knowledge, via the label indicating the job type, about the job to be executed on the first group of nodes, before or during its execution, to allow a power capping that is better suited to the operating of the job. It is then possible to favour the execution of certain jobs based on their type, thanks to the predefined value that depends on the first job type, and so to increase the job throughput on the first group of nodes.

For example, it is possible to favour compute-type jobs over mixed-type jobs and memory-type jobs, and to favour mixed-type jobs over memory-type jobs. Therefore, the proposed invention allows reducing, and even preventing, performances degradation of the HPC.

This method also allows a significant adaptability to various HPC environments as it only requires knowing the job type to be carried out.

It is also noted that this method is compatible with other power capping techniques, such as within job power capping adjustment.

Apart from the characteristics mentioned in the previous paragraphs, the method according to a first aspect of the invention may have one or several complementary characteristics among the following characteristics considered individually or in any technically possible combinations.

According to an embodiment, the method further comprises, when a sum of values of the power capping of all the nodes of the plurality of nodes of the high-performance computer is strictly superior to the predefined threshold:
- Commanding a power capping increase enforcement of the power supplied to one or more nodes of the plurality of nodes of the high-performance computer that do not belong to the first group of nodes.

Thanks to this embodiment, it is possible to dynamically modify the power capping values, except the first capping value, that have been already set and enforced on the nodes of the HPC. The overall power consumption of the HPC can therefore be dynamically controlled so that it complies with the maximum allowable power consumption of the HPC defined by the predefined threshold.

According to an embodiment, the method comprises:
- Obtaining a list of categories of allocation of the nodes, said list of categories being in a predefined order, the predefined order being:
   ∘ The nodes of the plurality of nodes of the high-performance computer that are unallocated;
   ∘ The nodes of the plurality of nodes of the high-performance computer that do not belong to the first group of nodes and that are allocated to a memory-type job;
   ∘ The nodes of the plurality of nodes of the high-performance computer that do not belong to the first group of nodes and that are allocated to a mixed-type job;
   ∘ The nodes of the plurality of nodes of the high-performance computer that do not belong to the first group of nodes and that are allocated to a compute-type job;
wherein the one or more nodes of the plurality of nodes of the high-performance computer on which the power capping increase enforcement is commanded are selected in the list of categories of the nodes allocation following the predefined order, until the sum of values of the power capping of all the nodes of the plurality of nodes of the high-performance computer is inferior to the predefined threshold.

Thanks to this embodiment, the power capping of each node of the HPC, different from the nodes of the first group, can be progressively modified in order to comply the HPC power consumption with its maximum allowable power consumption, starting from nodes for which a stronger power capping would have no to little impact on their computing performances (not allocated nodes and nodes allocated to memory-type jobs or mixed-type jobs), up to nodes that are more sensitive to power capping (the ones running compute-type jobs).

According to an embodiment, within each category of the list of categories, the nodes of the plurality of nodes are ordered following an ascending order of the number of said categories nodes that is allocated to each job of said category.

In other words, the nodes are ordered starting from the job to which the smallest number of nodes is allocated among the jobs of said category up to the job to which the highest number of nodes is allocated among the jobs of said category.

Thanks to this embodiment, it is possible to minimize desynchronization risks induced by power capping between the MPI (standing for Message Passing Interface) tasks executed by the nodes allocated to a given job, as these risks increase with the number of allocated nodes to said given job.

According to an embodiment, for each of the one or more nodes of the plurality of nodes of the high-performance computer on which the power capping increase enforcement is commanded, the power capping increase reduces the power capping value of said node to a second value, the second value being dependent on the category of the node according to the list of categories of the nodes allocation. Thanks to this embodiment, the modification of the power capping for nodes other than the nodes of the first group can be thoroughly adjusted so that the HPC complies with its maximum allowable power consumption while limiting the impact of power capping for nodes running power capping sensitive jobs.

According to an embodiment, for each of the one or more nodes of the plurality of nodes of the high-performance computer on which the capping decrease enforcement is commanded, the power capping increase reduces the power capping value of said node to a minimal operating power value, the minimal operating power value being dependent on said node.

Thanks to this embodiment, the power capping of every node can be progressively hardened to its maximum, i.e., to the minimal power that must use the node to properly operate (without becoming unresponsive), until the HPC complies with its maximum allowable power consumption.

According to an embodiment, the predefined value is determined:
- Via a table of values associating a job type with at least one corresponding predefined value; or
- Based on a first stochastic model built from collected data relating to the execution of previous jobs similar to the first job.

According to an embodiment, the first label is determined :
- By a user requesting the computation of the first job;
- Based on a history of previous jobs labels, the previous jobs being similar to the first job; and/or
- Based on a second stochastic model built from collected data relating to the execution of previous jobs similar to the first job.

According to a second aspect of the invention, it is provided a device for capping the power consumption of a high-performance computer, configured to implement the method according to the first aspect.

According to a third aspect of the invention, it is provided a high-performance computer, comprising:
- A plurality of nodes;
- A scheduler, connected to the plurality of nodes and configured to allocate nodes to jobs and to schedule the execution of said jobs;
- The device for capping the power consumption of the high-performance computer according to claim 8, the device being connected to the scheduler and to the plurality of nodes.

According to an embodiment, the high-performance computer further comprises a history module configured to:
- Store a history of previous jobs labels, the previous jobs being similar to the first job; and/or to
- Store collected data that relates to the execution of previous jobs similar to the first job and to build a stochastic model based on said collected data.

According to a fourth aspect of the invention, it is provided a computer program product comprising instructions which, when the program is executed by a computer, causes the computer to carry out the method according to the first aspect.

According to a fifth aspect of the invention, it is provided a computer-readable medium comprising instructions which, when executed by a computer, cause the computer to carry out the method according to first aspect.

The invention and its various applications will be better understood by reading the following description and examining the accompanying figures.

### BRIEF DESCRIPTION OF THE FIGURES

The figures are presented for information purposes only and in no way limit the invention.
- Figure 1 is a flow chart of a method according to the invention.
- Figure 2 schematically represents a high-performance computer according to the invention.

### DETAILED DESCRIPTION OF THE PREFERRED EMBODIMENT

Some embodiments of devices and methods in accordance with embodiments of the present invention are now described, by way of example only, and with reference to the accompanying drawings. The description is to be regarded as illustrative in nature and not as restrictive.

The presented method circumvents the disadvantages of using a power capping mechanism for a High-Performance Computer (HPC) by improving in two different, but complementary, ways how the power capping is defined and enforced.

On the one hand, the method relies on defining the power capping for nodes allocated to a job at a value that depends on the type of job that is requested. This means that the power capping can be adjusted to the kind of the requested job, and so is adjusted depending on the resources that the job needs.

For instance, by doing so, it is possible to define a higher power capping value for jobs that require more computing resources, such as processors and/or accelerators, and a lower power capping value for jobs that require fewer computing resources.

On the other hand, the method provides a mechanism to adapt already defined power capping values. This allows to reach balance between the power capping of nodes for currently active nodes (thus the current maximum power consumption of these nodes) and the power capping of nodes for an incoming job. As a consequence, the computing performances of the HPC, especially for this incoming job, but also for the other running jobs, are not downgraded, or at least less degraded, while ensuring that the power consumption of the HPC complies with power consumption rules. By "less degraded" is meant that the degradation rate due to the power capping is lesser, by implementing the provided method, than without. For example, the degradation can be inferior to 95 % of the degradation without implementing the presented method, such as inferior to 90 %, or even less, for instance inferior or equal to 50 %.

In other words, this second mechanism allows to diminish already defined power capping of some nodes, under certain conditions, in order to set a higher power capping on nodes allocated to the incoming job.

The whole concept of the herein described approach is actually based on the empirical observation that HPC applications exhibit a wide range of workloads, which all have different sensibilities to power capping regarding performance. Indeed, some applications or jobs tend to be more memory-bound so they do not constantly require the computing resources to be used at their nominal capacity (i.e., the maximum computing capacity, and thus power consumption, at which said resource performs well, meaning without failure) to execute the workload associated with the application/job. As a consequence, when considering the average behaviour of these applications/jobs, the nodes allocated to them can be constrained by a power capping with only moderate to no impact on their computing performances.

However, other applications/jobs are more compute-bound and they highly and almost permanently stress the computing cores to their nominal capacity. As a result, decreasing the raw computational power offered to these nodes, for instance via the enforcement of a power cap, induces significant computing performances degradation. In other words, compute-bound applications performances are highly sensitive to power capping.

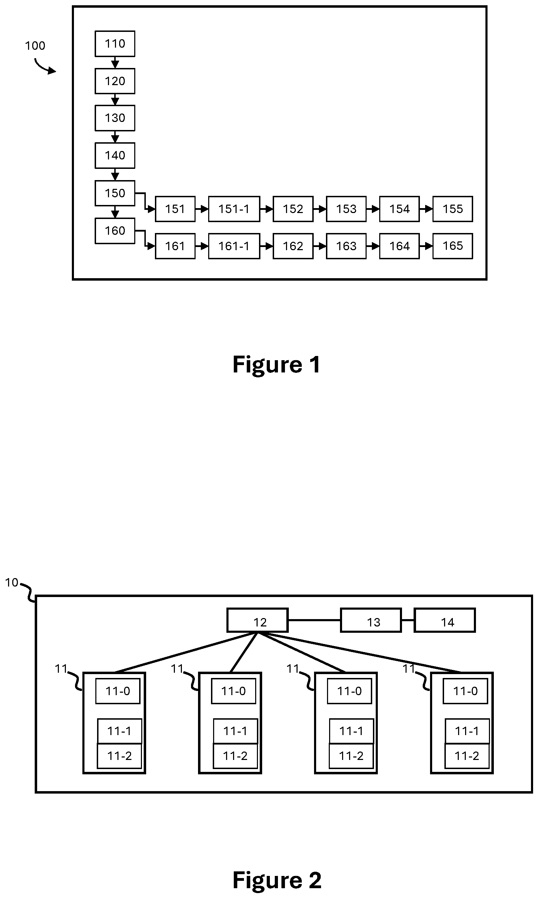

A first aspect of the invention, in reference to figure 1, then relates to a computer implemented method 100 for capping the power consumption of a high-performance computer (HPC).

The HPC 10, in reference to figure 2, comprises a plurality of nodes 11. Each node 11 comprises one or more resources, such as one or more memories 11-1 (volatile or non-volatile) and one or more computing resources 11-2 (for instance, processors and/or accelerators). Each node is able to run the job that is allocated to it by the scheduler 12 of the HPC 10.

The scheduler 12 defines the nodes 11 allocation to newly submitted jobs and schedules the execution of the jobs on the allocated nodes.

Each node 11 of the plurality of nodes 11 is power capped at a predefined capping value. This means that a power capping is already defined and enforced on each node 11 of the plurality of nodes 11 of the HPC 10, prior to implementing the method 100. This predefined capping value can be the same or different for a part or every node 11 of the plurality of nodes 11.

For each node 11, the predefined capping value can correspond to a default value or can correspond to a power capping value determined via a previous implementation of the method 100.

The predefined capping value can be dependent on the node it is associated with, especially the specifications of its resources.

In the current context, the power capping is applied to the node 11 itself, regardless of whether a particular resource of the node 11 is the target of the power capping. This means that it does not matter whether this power capping only concerns one specific resource, several resources of a same type, or all the resources of the node 11.

The sum of the predefined capping values at which every node 11 of the HPC 10 is power capped is inferior to a predefined threshold. The predefined threshold corresponds to a maximum amount of power that can be consumed by the HPC, this threshold can vary over time, either via a manual modification by an operator of the HPC or automatically via any technique adapted to determine said predefined threshold.

Because this sum is inferior to the predefined threshold, it is ensured that the HPC 10 cannot consume more than the threshold value.

The plurality of nodes 11 of the HPC 10 comprises at least some nodes 11 that are allocated to the execution of a first job. These allocated nodes 11 form a first group of nodes.

In other words, the plurality of nodes 11 comprises a first group of nodes 11, wherein each node 11 of said first group of nodes 11 is allocated to the first job.

The allocation of the nodes 11 of the first group is carried out by the scheduler 12, via any known technique.

The first job can be any job that can be executed on the HPC 10, i.e., on one or more of its nodes 11.

In order to define the power capping to be enforced on each node of the first group, the method 100 comprises a step 110 of obtaining a first label. This first label is associated with the first job and indicates what is the type of the first job. In other words, the label comprises at least a piece of data that corresponds to the job type of the first job.

In particular, the first job can be of any of the following types: a memory-type job, a compute-type job or a mixed-type job. The memory-type job, or memory-bound job, relates to a job whose performance is mostly limited by the specifications of the memory resources specifications of the nodes 11 they are allocated to. The compute-type job relates to a job whose performance is mostly limited by the specifications of the computing resources of the nodes 11 they are allocated to. The mixed-type job relates to a job that both uses memory resources and computing resources of the nodes 11 they are allocated to, and whose performance is both limited by the specifications of the memory resources and the computing resources of its allocated nodes, with less sensitivity than for memory-type jobs and compute-type jobs, respectively.

The overall power eagerness of the nodes 11 which are allocated to a memory-type job is less than the overall power eagerness of the nodes 11 which are allocated to a mixed-type job, which is less than overall power eagerness of the nodes 11 which are allocated to a compute-type job.

The first label can be obtained directly via the user who requests the execution of the job on the HPC 10, or via any another known technique able to produce said label.

The method 100 also comprises a step 120 of determining a first capping value. This first capping value is to be enforced on the HPC, especially on each node 11 of the first group.

The first capping value is determined to be equal to a predefined value. This predefined value is determined based on the job type of the considered first job. In other words, the first capping value is determined based on the first job type, indicated in the first label. The first capping value is then equal to a predefined value that depends on the first job type.

At least one predefined value is associated with each job type. There is then at least one predefined value for power capping memory-type jobs, at least one predefined value for power capping mixed-type jobs and at least one predefined value for power capping compute-type jobs.

The predefined value of a given job type can be different from the predefined values associated with the other job types. For example, the predefined value for a memory-type job can be inferior to the predefined value for a mixed-type job, which in turn is inferior to the predefined value for a compute-type job. There can be more than one predefined value per job type.

Such predefined values allow a better adjusted and smarter power capping that significantly reduces, or even negates, the computing performance drops induced by power capping the HPC.

Each predefined value is comprised between a Minimal Operating Power (MOP) value and a Thermal Design Power (TDP) value. Each predefined value is, for example, defined as a percentage of the TDP value. The compute-type predefined value can be equal to the TDP value. The memory-type predefined value can be equal to the MOP value.

The MOP value is the lowest value for power capping a given node 11 so that said node 11 is able to properly operate, i.e., without becoming unresponsive.

The TDP value is the thermal power the cooling system of a given node 11 should be able to dissipate so that the computing components of said node 11 can operate at their nominal performance level safely. More generally, the TDP value can be regarded as an estimation (or at least an accurate upper bound) of the power consumption of the computing components of a given node 11, while operating at their nominal performance level, under a load, i.e., while running a job.

The MOP value and the TDP value are then dependent on the considered node 11, which means that these values can be different for several or all the nodes 11 of the HPC, for one, two or every job type. Under this consideration, defining the predefined value as percentage of the TDP value avoid knowing exactly the TDP value of each node 11 of the first group, when aiming at power capping these nodes 11. It is only necessary to know the percentage at which the power capping is to be set.

The MOP value and TDP value can be obtained via any known technique, including from the respective datasheet of the nodes, theoretical data provided, for example, by the HPC 10 provider or the resource builder, or even via measurements of power consumption of each node 11 under a known load, such as a load making the resources of said node 11 to operate at their nominal state. A margin can be applied for defining these MOP and TDP values, in order to ensure never getting under the MOP value and never getting over the TDP value.

As an example, the predefined value for a compute-type job can be set between 100 % and 50 % of the TDP value, as long as it is greater than the MOP value of the considered node 11. For example, this predefined value can be set between 100 % and 60 % of the TDP value, even between 100 % and 70 % of the TDP value, such as equal to 100 %, 95 %, 90 %, 85 % or less of the TDP value.

Concerning the memory-type jobs, the associated predefined value can be set between the predefined value associated with the compute-type jobs and the MOP value, for example it can be set between 70 % of the TDP value and the MOP value, even between 60 % of the TDP value and the MOP value, or even between 50 % of the TDP value and the MOP value. For instance, this predefined value can be equal to 60 %, 55 %, 50 %, 45% or less of the TDP value, as long as this predefined value is higher than the MOP value of the node.

Concerning the mixed-type jobs, the associated predefined value can be set between the predefined value associated with the compute-type jobs and the predefined value associated with the memory-type jobs, for example it can be set between 70 % and 50 % of the TDP value, as long as it is greater than the MOP value, even between 65 % and 55 % of the TDP value. For instance, this predefined value can be equal to 70 %, 65 %, 60 %, 55%, 50%, or even more or less as long as the previously mentioned conditions are respected.

As an illustrative embodiment, the predefined value for compute-type jobs corresponds to 100 % of the TDP value, the predefined value for mixed-type jobs corresponds to 70 % of the TDP value and the predefined value for memory-type jobs corresponds to 60 % of the TDP value. In this embodiment, when the first job is a compute-type job, the first capping value is then equal or higher than 100 % of the TDP for each node 11 of the first group. Otherwise, if the first job is a mixed-type job, the first capping value is then equal or higher than 85 % of the TDP for each node 11 of the first group. Otherwise again, if the first job is a memory-type job, the first capping value is then equal or higher than 70 % of the TDP for each node 11 of the first group. Is this example, the MOP value, for each node 11 of the first group, is equal or higher than 70 % of the TDP of said node.

The method 100 also comprises a step 130 of commanding the capping enforcement of the power that is supplied to each node 11 of the first group of nodes 11. This power capping enforcement makes each node 11 of this first group to be power capped by the first capping value, determined at the step 120.

In other words, the power capping is enforced, i.e., is commanded to be enforced, to the determined first capping value for each node 11 of the first group of nodes 11. Herein, the first capping value corresponds to a value of power capping that is considered best suited to allow the first job to be executed on the nodes 11 of the first group with no or limited computation performance degradation (i.e., the degradation is reduced by 5 %, even by 10 %, compared to non-power capped nodes 11 running the same first job).

The predefined threshold (i.e., the sum of the maximum power consumption allowed for every node 11 of the plurality of nodes 11 of the HPC 10) is superior or equal to the sum of the respective MOP values of all the nodes 11 of the plurality of nodes 11 of the HPC 10.

It is noted that the steps 110, 120 and 130 can be carried out before or after the start of the execution of the first job.

In some embodiments, the power capping of the nodes 11 of the first group at the first capping value, can lead to the HPC 10 not complying with its maximum allowable power consumption (i.e., the predefined threshold).

In this case, the method 100 comprises a step 140 of determining the sum of all the power capping values for every node 11 of the HPC 10. This means that the values of the power capping of all the nodes 11 of the plurality of nodes 11 of the high-performance computer 10 are summed.

In particular, this sum is equal to the sum of the respective power capping values (in watts) of every node 11 of the first group of nodes 11, considering these values correspond to the first capping value, added to the sum of the respective power capping values (in watts) of every node 11 of the plurality of nodes 11 of the HPC 10 that does not belong to the first group of nodes 11, and considering these values correspond to the predefined capping value.

When this sum is inferior or equal to the power threshold, then there is no need to further adapt the power capping already enforced on the nodes 11 of the HPC 10 that do not belong to the first group.

However, when this sum is strictly superior to the predefined threshold, the method then comprises a step 150 of commanding an increase of the power capping of the nodes 11, other than the nodes 11 of the first group. In other words, this step commands a capping increase enforcement of the power supplied to one or more nodes 11 of the plurality of nodes 11 of the high-performance computer 10 that do not belong to the first group of nodes 11.

The aim of this capping increase is to strengthen the power capping already applied to these nodes 11, in order to ensure complying the HPC 10 to the predefined threshold, which is in particular the case for compute-type jobs running on a significant number of nodes (e.g., at least 32 nodes or even at least 64 nodes), while maintaining the power capping of the first group nodes 11 at the first capping value. This capping strengthening means the decrease of the power capping value of the considered nodes 11 (i.e., an allowed power budget for the considered nodes), and thus the decrease of the power consumption of the considered nodes 11 (if their respective power consumption, before the step 130 of commanding the enforcement of the power capping, is higher than the first capping value.

It is noted that the step 140 of determining the power capping values sum and the step 150 of commanding the power capping increase can each either be carried out before or after the step 130 of commanding the enforcement of the power capping of the nodes 11 of the first group. This means that this adjustment can either be anticipated before enforcing the power capping of the nodes 11 of the first group, or be a correction after this enforcement.

In some embodiments, in order to carry out the power capping adjustment of the step 150, the method can comprise, before commanding this power capping increase, a step 145 of obtaining a list comprising the categories of allocation of the nodes 11 of the HPC 10. This list, entitled "list of the categories of allocation of the nodes 11" is established according to a predefined order.

More precisely, this list indicates in the first place the nodes 11 that are not allocated among all the nodes 11 of the plurality of nodes 11 of the HPC 10. Then it indicates the nodes 11, other than nodes 11 of the first group, that are allocated to still running memory-type jobs. It further indicates the nodes 11, other than nodes 11 of the first group, that are allocated to still running mixed-type jobs. Finally, the list indicates the nodes 11, other than nodes 11 of the first group, that are allocated to still running compute-type jobs.

A node is indicated in a category of the list via a piece of data that unambiguously identifies said node. For example the piece of data for a given node is a unique identifier associated with said node, for example the identifier corresponding to said node that is used by the scheduler 12 of the HPC 10 to refer the nodes 11 of the HPC 10.

In other words, the predefined order is the following:
- The nodes 11 of the plurality of nodes 11 of the high-performance computer 10 that are unallocated (also called first category nodes);
- The nodes 11 of the plurality of nodes 11 of the high-performance computer 10 that do not belong to the first group of nodes 11 and that are allocated to a memory-type job (also called second category nodes);
- The nodes 11 of the plurality of nodes 11 of the high-performance computer 10 that do not belong to the first group of nodes 11 and that are allocated to a mixed-type job (also called third category nodes);
- The nodes 11 of the plurality of nodes 11 of the high-performance computer 10 that do not belong to the first group of nodes 11 and that are allocated to a compute-type job (also called fourth category nodes).

In this embodiment, the nodes 11 of the HPC 10 that are concerned by the command of the power capping increase, of step 150, are recursively chosen by selecting more and more nodes 11, following the predefined order of the list of the categories of allocation of the nodes 11. This way, it is possible to first reduce the power capping value of unused nodes 11, and, if it is no sufficient, to further reduce the power capping value of nodes 11 running less power capping sensitive jobs (i.e., memory-type jobs), then, if it again not sufficient, of nodes 11 running more power capping sensitive jobs (i.e., mixed-type jobs), up to, if necessary, reduce the power capping value of nodes 11 running significantly power capping sensitive jobs (i.e., compute-type jobs).

Fortunately, reducing the value of the power capping applied to unused nodes 11 is mostly sufficient to compensate for a high first capping value (i.e., with no or low power capping of the first group nodes 11). The further decrease of the power capping value applied to nodes 11 running memory-type jobs is also often sufficient to make the HPC 10 power consumption comply with the predefined threshold, although the method 100 also allows strengthening the power capping of nodes 11 running mixed-type jobs and even compute-type jobs.

In other words, the one or more nodes 11 of the plurality of nodes 11 of the high-performance computer 10 on which the capping increase enforcement is commanded are selected in the list of categories of the nodes 11 allocation following the predefined order. This selection is carried out until the sum of values of the power capping of all the nodes 11 of the plurality of nodes 11 of the high-performance computer 10 is inferior to the predefined threshold.

Depending on the embodiment, the one or more nodes 11 of the plurality of nodes 11 of the high-performance computer 10 on which the capping increase enforcement is commanded are selected among one, two, three or all of the first, second, third and/or fourth categories, while following the predefined order.

To this end, the step 150 can comprise a sub-step 151 of reducing the power capping value of one or more unallocated nodes 11 (i.e., first category jobs), if there is at least one first category node. These first category nodes considered for strengthening their power capping are recursively selected, i.e., one at a time, starting from one of the unallocated nodes 11 up to every unallocated node 11, until the sum of values of the power capping of all the nodes 11 of the plurality of nodes 11 of the high-performance computer 10. This means that, at this sub-step, this sum is derived each time another unallocated node 11 is additionally considered for the power capping increase.

Alternatively, the sub-step 151 can directly decrease the respective power capping value of every unallocated node 11 at once, without recursively selecting these unallocated nodes.

Whatever the implemented variant for selecting the unallocated nodes 11 considered for reducing their respective power capping value, the sum of values of the power capping of all the nodes 11 of the plurality of nodes 11 of the high-performance computer 10 is computed in the same way. More precisely, this sum is equal to:
- The sum of the respective power capping values (in watts) of every node 11 of the first group of nodes 11, considering these values correspond to the first capping value;
- Added to the sum of the respective power capping values (in watts) of every first category nodes 11 for which these values correspond to a reduced capping value (further called the second capping value);
- Added to the sum of the respective power capping values (in watts) of every first category nodes 11 for which these values correspond to the predefined capping value;
- And added to the sum of the respective power capping values (in watts) of every non-first category nodes 11 and non-first group nodes 11, considering these values correspond to the predefined capping value.

In some variant, when there is no first category node 11 or when the above defined sum remains superior to the predefined threshold after completing the sub-step 151, the step 150 comprises a sub-step 152 of reducing the power capping value of one or more nodes 11, different from the nodes of the first group of nodes, that are allocated to a memory-type job (i.e., second category jobs). This step is carried out if there is at least one second category node.

This step can be carried out in a comparable manner as the sub-step 151: i.e., either by recursively strengthening the power capping of more and more of these nodes 11 running memory-type jobs, or by strengthening at once the power capping of each of these nodes. The main difference between the sub-step 152 and the sub-step 151, is that the nodes 11 are not one after one selected following the predefined order to one by one strengthen the power capping of another node. In fact, during this sub-step 152, the recursive node 11 selection is job-wise implemented: this means that the nodes 11 of the second category are sorted and grouped by job. This way, the recursive strengthening of the second category nodes power capping is applied to the second category nodes of the first job listed in this second category, if any. Then, if this strengthening is not sufficient with regards to the sum of value of the power capping applied to every node 11 of the HPC, the second category nodes corresponding to the following job listed in the second category order, if any, are selected for strengthening their power capping, and so on with the following second category nodes of the next job listed in the second category.

Whatever the implemented variant for carrying out this sub-step 152, the sum of values of the power capping of all the nodes 11 of the plurality of nodes 11 of the high-performance computer 10 is computed in the same way. More precisely, this sum is equal to:
- The sum of the respective power capping values (in watts) of every node 11 of the first group of nodes 11, considering these values correspond to the first capping value;
- Added to the sum of the respective power capping values (in watts) of every first category nodes 11, considering these values correspond to a reduced capping value (further called the second capping value);
- Added to the sum of the respective power capping values (in watts) of every second category nodes 11 and for which these values correspond to the predefined capping value;
- Added to the sum of the respective power capping values (in watts) of every second category nodes 11 and for which these values correspond to a reduced capping value (further called the second capping value);
- And added to the sum of the respective power capping values (in watts) of every node 11 of the plurality of nodes 11 of the HPC 10 that do not belong to the first group, the first category nor the second category, considering these values correspond to the predefined capping value.

In some variant, when there is no first and/or second category nodes or when the above defined sum remains superior to the predefined threshold after completing the sub-steps 151 and/or 152, the step 150 comprises a sub-step 153 of reducing the power capping value of one or more nodes 11, different from the nodes 11 of the first group of nodes, that are allocated to a mixed-type job (i.e., third category jobs). This step is carried out if there is at least one third category node.

This step can be carried out in a same manner as the sub-step 152: i.e., either by recursively strengthening the power capping of more and more of these nodes 11 running mixed-type jobs, on a job-by-job basis, or by strengthening at once the power capping of each of these nodes.

Whatever the implemented variant for carrying out this sub-step 153, the sum of values of the power capping of all the nodes 11 of the plurality of nodes 11 of the high-performance computer 10 is computed in the same way. More precisely, this sum is equal to:
- The sum of the respective power capping values (in watts) of every node 11 of the first group of nodes 11, considering these values correspond to the first capping value;
- Added to the sum of the respective power capping values (in watts) of every first category nodes 11, considering these values correspond to a reduced capping value (further called the second capping value);
- Added to the sum of the respective power capping values (in watts) of every second category nodes 11, considering these values correspond to a reduced capping value (further called the second capping value);
- Added to the sum of the respective power capping values (in watts) of every third category nodes 11 and for which these values correspond to the predefined capping value;
- Added to the sum of the respective power capping values (in watts) of every third category nodes 11 and for which these values correspond to a reduced capping value (further called the second capping value);
- And added to the sum of the respective power capping values (in watts) of every node 11 of the plurality of nodes 11 of the HPC 10 that do not belong to the first group, the first category, the second category nor the third category, considering these values correspond to the predefined capping value.

In some variant, when there is no first, second and/or third category nodes or when the above defined sum remains superior to the predefined threshold after completing the sub-steps 151, 152 and/or 153, the step 150 comprises a sub-step 154 of reducing the power capping value of one or more nodes 11, different from the nodes 11 of the first group of nodes, that are allocated to a compute-type job (i.e., fourth category jobs). This step is carried out if there is at least one fourth category node.

This step can be carried out in a same manner as the sub-steps 152 and 153: i.e., either by recursively strengthening the power capping of more and more of these nodes 11 running compute-type jobs, on a job-by-job basis, or by strengthening at once the power capping of each of these nodes.

Whatever the implemented variant for carrying out this sub-step 153, the sum of values of the power capping of all the nodes 11 of the plurality of nodes 11 of the high-performance computer 10 is computed in the same way. More precisely, this sum is equal to:
- The sum of the respective power capping values (in watts) of every node 11 of the first group of nodes 11, considering these values correspond to the first capping value;
- Added to the sum of the respective power capping values (in watts) of every first category nodes 11, considering these values correspond to a reduced capping value (further called the second capping value);
- Added to the sum of the respective power capping values (in watts) of every second category nodes 11, considering these values correspond to a reduced capping value (further called the second capping value);
- Added to the sum of the respective power capping values (in watts) of every third category nodes 11, considering these values correspond to a reduced capping value (further called the second capping value);
- Added to the sum of the respective power capping values (in watts) of every fourth category nodes 11 and for which these values correspond to the predefined capping value;
- Added to the sum of the respective power capping values (in watts) of every fourth category nodes 11 and for which these values correspond to a reduced capping value (further called the second capping value);
- And, optionally (if applicable and/or needed), added to the sum of the respective power capping values (in watts) of every node 11 of the plurality of nodes 11 of the HPC 10 that do not belong to the first group, the first category, the second category, the third category nor the fourth category, considering these values correspond to the predefined capping value.

It is to be noted that step 150 can only comprise one or some of steps 151 to 154. Then, in some embodiments, only a part of these sub-steps 151 to 154 is carried out, regardless of the reason for implementing only a part of them.

For example:
- The step 150 can only comprise the sub-step 151 if there is at least one first category node;
- It can only comprise the sub-step 152 if there is at least one second category node;
- It can only comprise the sub-step 153 if there is at least one third category node; and/or
- It can only comprise the sub-step 154 if there is at least one fourth category node.

The step 150 then comprises a step 155 of commanding the power capping increase for the one or more nodes 11 of the plurality of nodes 11 of the high-performance computer selected through the sub-steps 151 to 154, i.e., the one or more nodes 11 of the plurality of nodes 11 of the high-performance computer selected in each node category, according to the list of categories of the nodes 11 allocation.

It is also to be noted that each sub-step 151 to 154 can comprise the power capping increase enforcement commandment for the one or more nodes 11 of the plurality of nodes 11 of the high-performance computer selected during said sub-step. In this case, the step 150 does not comprise the step 155 of commanding the power capping increase of all nodes 11 selected thought sub-steps 151 to 154.

In some embodiments, it is possible that the above defined sum remains superior to the predefined threshold after completing the sub-step 154. In this case, the method 100 has to be carried out again, starting from the step 120 of determining the first capping value. During this new implementation of the method 100, the newly determined first capping value is different from the first capping value determined at the previous implementation of the method 100, preferably inferior to previously determined first capping value.

In some embodiments, it is possible to refine the list of categories of the nodes 11 allocation by creating one or more sub-categories per category. This allows creating, per node category, a priority order following which the one or more nodes 11 of the plurality of nodes 11 of the high-performance computer 10 on which the capping increase enforcement is commanded.

For each category, these sub-categories can, for example, be based on:
- A priority level of the job allocated to the considered node 11 or nodes, allowing, for example, to strengthen first the power capping of nodes 11 allocated to lower priority jobs and to strengthen last the power capping of nodes 11 allocated to higher priority jobs, of said category. The priority level of each job can be manually or automatically defined by any known technique;
- A number of nodes 11 allocated to the considered job, allowing, for example, to strengthen first the power capping of nodes 11 corresponding to jobs allocated to fewer nodes, and to strengthen last the power capping of nodes 11 corresponding to jobs allocated to more nodes, of said category. The number of nodes per job can be obtained from the scheduler 12;
- A nature of the computing resource of the nodes 11 allocated to the considered job, for example, to strengthen first the power capping of nodes 11 having accelerators, as they consume more energy than other computing resources types;
- A specific hardware characteristic of the nodes 11 or the resources, such as the computing resources, for example, to strengthen first the power capping of nodes having resources of a certain type, regarding this specific hardware characteristic. As an example, the specific hardware characteristic can be the CPU architecture (x86, aarch64, power9, etc.);
- A remaining duration before a walltime of the considered job, for example, to strengthen first the power capping of nodes 11 allocated to jobs with a longer walltime than others;
- An identifier of the user that submitted the job and/or an identifier of the application that corresponds to said job, for example, to order the nodes 11 whose power capping is to be strengthen depending on history data concerning this user and/or this application, for example based on a habit of the user or previous power consumption knowledge and/or error rates for this application.

As an example, in some embodiments, within each category of the list of categories, the nodes of the plurality of nodes are ordered following a descending order of the number of said categories nodes that is allocated to each job of said category. In other words, the nodes are ordered starting from the job to which the highest number of nodes is allocated among the jobs of said category up to the job to which the smallest number of nodes is allocated among the jobs of said category.

Thanks to this embodiment, nodes allocated to jobs to which a smaller number of nodes are allocated could be capped at their TDP value with a higher probability, therefore increasing the job throughput for these jobs. This ordering strategy is particularly well-suited when the job scheduling queues are filled with a large proportion of jobs to which a small number of nodes are allocated (for example, less than 64 nodes, or even less than 32 nodes or even less than 5 nodes).

In another example, in some embodiments, within each category of the list of categories, the nodes of the plurality of nodes allocated to the jobs of said category are ordered following a descending order of the remaining walltime of said category jobs. In other words, the nodes are ordered starting from the job with the longest remaining walltime among the jobs of said category up to the job with the shortest remaining walltime among the jobs of said category.

This embodiment makes it less probable that performance degradations induced by power capping entails job walltime cancellations.

In yet another example, in some embodiments, within each category of the list of categories, the nodes of the plurality of nodes allocated to the jobs of said category are ordered following an ascending order of the priority level of said category jobs. In other words, the nodes are ordered starting from the job with the lowest priority level among the jobs of said category up to the job with the highest priority level among the jobs of said category.

Any other known criterion that allows classifying the nodes 11 per sub-categories can be applied here to classify the nodes 11 of the HPC.

It is noted that this sub-category system can also be used for sub-classifying the job-types when determining the predefined value which the first capping value is equal to. This means the predefined value of a given job type can depend, within said given job type class (i.e., memory type, mixed type or compute type jobs), on other criteria as those listed above. For instance, the predefined value, within a given job type class can depend on the number of nodes of the first group of nodes, the priority level of the job, the nature of the computing resource of the first group nodes, a specific hardware feature, a walltime associated with the first job, an expected computing duration of the first job, and/or an identifier of the user and/or the application submitting the job, etc.

The criterion and/or criteria used to sub-classify the nodes into sub-categories can be selected by any known technique, that can either be automatic, such as a dedicated algorithm, or manually, for example by the administrator of the HPC. This selection can also be based on historical data associated with previously executed applications and their related jobs, and/or based on machine learning models.

In some embodiments, as previously mentioned, the power capping increase implies decreasing to a second value the value of the already enforced power capping of the nodes 11 of the HPC 10 for which the power capping strengthening enforcement is commanded. This means that, for each of the one or more nodes 11 of the plurality of nodes 11 of the high-performance computer on which the power capping increase enforcement is commanded, the power capping increase translated into reducing the power capping value of said node 11 to said second value.

This second value depends on the category of the node 11 according to the list of categories of the nodes allocation. Indeed, the power capping value reduction can be different regarding the node category of the considered nodes, for example in order to mitigate computing performance drops induced by the power capping strengthening.

This can be achieved, for example, by applying a second value, for a given node 11 of a given node category, equal to an alternative predefined value which is inferior to the predefined value associated to the job type corresponding to said node category.

Each alternative predefined value (at least one per node category, i.e., at least one per job type) is defined in a similar manner as the predefined values associated with each job-type. In fact, the alternative predefined values can be defined along with the predefined values as acceptable power capping values within the range of values corresponding to the considered job type. Each alternative predefined value complies with the same conditions applied to the definition of the predefined value of the same job type.

In other words, each job type can be associated with a list of predefined values (for power capping) within a range of values, the highest value corresponding to the predefined value while the other values correspond to alternative predefined values. For instance, the alternative predefined value for a compute-type job can be set between 100 % and 50 % of the TDP value, as long as it is greater than the MOP value of the considered node 11 and higher than the predefined value for this job type. For example, this alternative predefined value can be set between 100 % and 60 % of the TDP value, even between 100 % and 70 % of the TDP value, such as equal to 95 %, 90 %, 85 %, 80 % or less of the TDP value.

Concerning the memory-type jobs, the associated alternative predefined value can be set between the alternative predefined value associated with the compute-type jobs and the MOP value, for example it can be set between 70 % of the TDP value and the MOP value, even between 60 % of the TDP value and the MOP value, or even between 50 % of the TDP value and the MOP value. For instance, this alternative predefined value can be equal to 55 %, 50 %, 45%, 40 % or less of the TDP value, as long as this alternative predefined value is higher than the MOP value of the node 11 and is lower than the corresponding predefined value for this job type.

Concerning the mixed-type jobs, the associated alternative predefined value can be set between the alternative predefined value associated with the compute-type jobs and the alternative predefined value associated with the memory-type jobs, for example it can be set between 70 % and 50 % of the TDP value, as long as it is greater than the MOP value, even between 65 % and 55 % of the TDP value. For instance, this predefined value can be equal to 65 %, 60 %, 55% or even more or less as long as the previously mentioned conditions are respected.

In the case of second, third and/or fourth category nodes, the second value can be any alternative predefined value that corresponds to the same job-type as the considered node category. This second value can be selected via any known techniques among the admissible alternative predefined values, for example by recursively decreasing the value of the selected alternative predefined value, starting from the alternative predefined value that is the closest to the predefined value, until the sum of values of the power capping of every node 11 of the HPC 10 complies with the predefined threshold.

In the case of first category nodes, the second value is equal to the MOP value of the considered node. In some embodiments, the second value for first category nodes can be lower than the MOP value, for example when it is known from an external source of information (e.g. the administrator of the HPC 10) that some nodes are to be idle/inactive for an extensive period of time, but are not going to be powered off. By doing so, more flexibility is offered to the step 150 to refine the power capping of active nodes 11 other that the first group nodes 11.

As it will be further illustrated, this second value can, in some cases, be equal to the MOP value of the node 11 for each node 11 on which the power capping is to be strengthened.

In some embodiments, the step 150 comprises a supplementary sub-step 151-1 of commanding a power capping decrease enforcement of the second, third and/or fourth category nodes, after carrying out sub-step 151 of increasing the power capping of first category nodes and before sub-step 152 of increasing the power capping of second category nodes.

This sub-step 151-1 then consists in applying a weaker power capping to the second, third, and/or fourth category nodes, i.e., a higher upper bound on the power consumption, before strengthening the power capping on these nodes. This higher power capping value can be comprised between the respective predefined capping value of said nodes and the respective TDP value of said nodes, such as being equal to the respective TDP value of said nodes.

This ensures that, in the case the strengthening of the power capping of first category nodes is sufficient to make the HPC 10 power consumption comply with the predefined threshold, every active node 11 (i.e., every node 11 that currently runs a job) can have the lowest possible power capping.

It is noted that this lowest power capping can be the lightest possible (i.e., is equal to the respective TDP value of said nodes) if the stronger power capping applied to first category nodes allows the HPC 10 consumption to comply with the predefined threshold.

When implementing the following sub-steps 152 to 154, i.e., for strengthening the power capping of second, third and fourth categories nodes, respectively, the sum of the values of the power capping of each node 11 of the HPC 10 is derived considering that the predefined value is equal to the respective TDP value of the nodes. In other words, this sum is computed as if the nodes 11 that are not selected for commanding the power capping strengthening have the lightest possible power capping.

In some embodiments, the second value to which is reduced the power capping of the one or more nodes 11 of the plurality of nodes 11 of the high-performance computer 10 on which the power capping increase enforcement is commanded is strictly higher than the respective MOP value of these nodes. This ensures to find a power capping compromise for every node 11 of the HPC 10 that is not the strongest power capping applicable.

However, it can happen that carrying out this power capping strengthening under this condition does not allow the HPC 10 power consumption to comply with the predefined threshold.

In this case, the method 100 comprises a second implementation of step 150, via a step 160 of commanding the strongest applicable power capping of nodes 11, other than the nodes 11 of the first group. In other words, this step commands the strongest applicable power capping enforcement to one or more nodes 11 of the plurality of nodes 11 of the high-performance computer 10 that do not belong to the first group of nodes 11.

The step 160 is carried out in the same way as the step 150, under the supplementary condition that the power capping value is reduced to the respective MOP value of each selected node.

In particular, the step 160 can comprise a sub-step 161 of minimising the power capping value of one or more unallocated nodes 11, which is carried out in the same way as the sub-step 151. The power capping value to which the power capping is minimised is here equal to the respective MOP value of each unallocated node 11. This sub-step 161 is however optional if every unallocated node 11 has already been power capped at its respective MOP value via the sub-step 151 when the step 150 is carried out.

The step 160 can also comprise a sub-step 162 of minimising the power capping value of one or more second category nodes 11, which is carried out in the same way as the sub-step 152. The power capping value to which the power capping is minimised is here equal to the respective MOP value of each second category node 11.

The step 160 can also comprise a sub-step 163 of minimising the power capping value of one or more third category nodes 11, which is carried out in the same way as the sub-step 153. The power capping value to which the power capping is minimised is here equal to the respective MOP value of each third category node 11. The step 160 can also comprise a sub-step 164 of minimising the power capping value of one or more fourth category nodes 11, which is carried out in the same way as the sub-step 154. The power capping value to which the power capping is minimised is here equal to the respective MOP value of each fourth category node 11.

The step 160 can also comprise a step 161-1 of commanding a power capping weakening enforcement of the second, third and/or fourth category nodes, after carrying out sub-step 161 of minimising the power capping value of first category nodes and before sub-step 162 of minimising the power capping value of second category nodes, carried out in a similar manner as the sub-step 151-1.

At the end of the step 160, the HPC 10 power consumption is guaranteed to comply with the predefined threshold, per definition of this predefined threshold.

In some embodiments, the second value can also be dependent on the priority level of the job executed on the considered nodes 11 and/or on the number of nodes 11 executing said job, and/or another job-related feature that allows defining a different second value for these jobs. These features correspond to the features used to determine the nodes sub-categories of the list of categories of the nodes allocation. For example, for a same node category (here a second, third or fourth category), the second value can be lower for a low priority level job and/or a low allocated number of nodes job than for a higher priority level job and/or a higher allocated number of nodes job.

This mechanism ensures that the power capping strengthening is adaptively applied to the nodes 11 of the HPC, with regards to the job running of the different nodes, in order to minimise the performance degradation due to power capping said nodes.

In some embodiments, it is possible to carry out again the method 100, starting from step 110, when a new job execution is requested. In this case, the new job becomes the first job and the nodes 11 allocated to the previous first job become nodes 11 of the plurality of nodes 11 of the HPC 10 that do not belong to the first group, i.e., they are one of the first, second, third or fourth category nodes. Therefore, the power capping applied via the previous first capping value to these nodes 11 can be modified through the course of the new implementation of the method 100 for this newly submitted job.

In some embodiments, it is possible to carry out this method 100 again, when a job that had been executed on one or more nodes, different from the first group, during the previous implementation of the method 100 has ended. This way, the power capping applied via this previous implementation of the method 100 can be adjusted, taking into account that these nodes 11 are now unallocated or allocated to another job, possibly with a different job type.

In some embodiments, the predefined value (i.e., the at least one predefined value associated with each job type), can be determined via a table of values. This table of values contains an association of a job type with at least one corresponding predefined value.

The table of values can be preestablished via any known techniques. For example, it can manually or automatically be defined by the operator of the HPC, for example based on power consumption rules imposed on the HPC 10 power consumption, on computing knowledge of the operator and/or any other condition which the predefined values definition can be based on, such as a history of previously set predefined values for each job type.

The predefined value corresponding to the first job type is then directly obtained from this table of values.

In an alternative embodiment, the predefined value can be determined via a first stochastic model. This first model is built from data collected during the execution of jobs of each different type on the different nodes 11 the plurality of nodes 11 of the HPC.

The aim of this first stochastic model is to determine the first value based on previously submitted jobs for which a previously enforced power capping is known (such as a default power capping value, a previously determined first capping values related to said jobs, and/or predefined values associated with the job type of the considered jobs), and/or the actual power consumption required to properly operate during the execution of the job is known.

The collected data associates one or more measurable quantity for one or more nodes, ideally for each node 11 of the HPC, with a type of job, at least comprising a power capping value for said node 11 and/or the actual power consumption of said node 11 running a job of said job type. The power consumption can be a mean power consumption per node 11 over a given time period, for example lapsing between 0,1 and 10,0 seconds, such as between 1,0 second and 5,0 seconds, for example equal to 1,0 second, 2,0 seconds, or 3,0 seconds.

For example, this data collection comprises the power consumption of each node 11 of the plurality of nodes 11 of the HPC 10 under a given load (i.e., while running a job of a given type). Each node 11 can be loaded with a same or different load and/or each node 11 can be sequentially loaded with different loads so that each node power consumption is evaluated for each job type.

Along with the power consumption, the data collection can comprise the temperature of each node 11 (for example the maximum temperature over three temperature probes on said node 11 - for example over the most three significant nodes) and/or any other measurable quantity of interest for determining the predefined values, such as the computation time of each node. This computation time can be obtained from the scheduler 12 (which, for example, measures the starting and ending times of every job execution).

The first stochastic model can be built using any known algorithm. For example, it can be based on a linear regression, a non-linear regression, a stochastic regression learning method (e.g., a random tree or a random forest algorithm) and/or a machine learning algorithm (e.g., a neural network).

Consequently, in this embodiment the predefined value to which is equal the first capping value is determined via this stochastic model, which is built from collected data relating to the execution of previous jobs similar to the first job.

In some embodiments, the first label can be obtained directly from the user requesting the execution of the first job. The first label is then directly indicated by the user when he submits the first job to the HPC 10 via the scheduler 12. Alternatively, the first label can be determined via a history of labels collected for jobs of the same type or similar to the first job. Indeed, when a job is submitted to the scheduler 12, the scheduler may receive an identifier or, at least, may be able to identify the origin of the job, for example from which application it originates. Therefore, it is possible to compare this identifier with already submitted jobs to determine whether jobs coming from the same origin (i.e., similar jobs) have already been submitted. By doing so, the first label can be deduced from labels of the previously submitted similar jobs, of which a history is stored in a memory, preferably a non-volatile memory, of the HPC 10.

In other words, the determination of the first label can be based on a history of previous jobs labels, these previous jobs being similar to the first job.

In an alternative embodiment, the first label can be determined via a second stochastic model. This second model is built from data collected during the execution of jobs of each different type on the different nodes 11 the plurality of nodes 11 of the HPC.

The aim of this second stochastic model is to identify the first label based on previously submitted jobs of which the job type is known (i.e., the label is known). The collected data associates one or more measurable quantity for one or more nodes, ideally for each node 11 of the HPC, with a type of job. These data can be the same as the data collected for building the first stochastic model.

The second stochastic model can be built using any known algorithm. For example, it can be based on a linear regression, a non-linear regression, a stochastic regression learning method (e.g., a random tree or a random forest algorithm) and/or a machine learning algorithm (e.g., a neural network).

Consequently, in this embodiment the first label is determined via this stochastic model, which is built from collected data relating to the execution of previous jobs similar to the first job.

One of the advantages of using the first and/or second stochastic models is to enable a non-binary label modelling for the jobs. Indeed, the stochastic models can be built so that they do not solely classify each job into only one category (i.e., memory-type, mixed-type or compute-type), but they can be built to continuously evaluate a membership degree of a newly submitted job (e.g., the first job) to each of these classes. Therefore the stochastic models can be able to model the first label and/or the first capping value as continuous variables and not only a finite number of classes or values.

In some embodiments, the first capping value is added to the collected data, along with the first label, in order to further adjust and improve the error rate of the first stochastic model and/or the second stochastic model.

In some embodiments, the first stochastic model and the second stochastic model are comprised in a same stochastic model that is able to determine both the first label and the first capping value.

The method 100 can be implemented by a device for capping the power consumption of the high-performance computer 10. This device is therefore configured to implement the method 100.

For example, the device comprises a processor and a memory. The memory comprises instructions that, when executed by the processor, lead the processor to implement the method 100.

The device 13 can, for example, be comprised in the HPC 10 or be outside of the HPC 10. The device 13 is connected by any known support to the scheduler 12 and to each node 11 of the plurality of nodes 11 of the HPC.

In some cases, the HPC 10 also comprises a history module 14 that is configured to store the history of previous jobs labels and/or to store the collected data for building the first stochastic model based on said collected data. To this end, the history module can be a non-volatile memory.

In some cases, the history module 14 is also configured to build the first stochastic model and/or the second stochastic model. The history module 14 then also comprises a processor that, when it executes instructions comprised in the history module memory, carries out the building of the first and/or second stochastic models.

The history module 14 is connected, via any known support, to the device 13.

The history module 14 can, in some cases, be comprised in the device 13.

The collected data are gathered via the device 13, thanks to one or more dedicated hardware or software probes implemented on each node 11 of the plurality of nodes 11 of the HPC. The collected data are then automatically transferred to the history model 14 for building the data collection.

The command for any power capping modification can be emitted by the device 13 either by:
- Directly sending said command to the processor of the corresponding node 11 or nodes. This node 11 then, upon detection of this command, carries out instructions in order to enforce the demanded power capping change (i.e., by enforcing the power capping value received). This technique is called "in-band enforcement".
- Sending said command to a board management card (BMC) corresponding to the node 11 or nodes 11 for which the power capping must be changed. The power capping change is then enforced by the BMC without needing halting the processor of the node 11 while it is executing a job. The HPC 10 can comprise one BMC for all the nodes, one BMC for several nodes 11 or one BMC per node 11 (in this latter case, each BMC can be implemented on its corresponding node).

The data collection can be achieved via the BMCs, which are then each able to collect this data and transmit it to the device 13. Alternatively, the data collection can be performed by the device 13 directly from the probes of the nodes, sometimes requiring using a part of the processor of the node 11 to carry out the measurements.

Before sending a power capping modification command, the device 13 can be configured to assess whether the required power capping modification is actually to be enforced. For example:
- If the power capping modification sets the power capping value of a node 11 or several nodes 11 to be equal to the currently enforced power capping value, then this command is not emitted;
- If the power capping modification sets the power capping value of a node 11 or several nodes 11 to be different from the currently enforced power capping value, then this command is emitted.

The device 13 is then also configured to monitor the power capping values that are currently enforced on every node 11 of the plurality of nodes 11 of the HPC, be it directly from the probes of the nodes 11 (via the node processors) or via the BMCs. Therefore, the device 13 can also be configured to ensure that, on each node, the currently enforced power capping is the power capping that is actually demanded. This allows monitoring power capping errors and possible countermeasures implementations to correct the faulty currently enforced power capping.

## Claims

1. Computer implemented method (100) for capping the power consumption of a high-performance computer (10), the high-performance computer comprising a plurality of nodes (11), each node (11) of the plurality of nodes (11) having a power capping at a predefined capping value, a sum of the respective predefined capping values of every node (11) of the plurality of nodes (11) being inferior to a predefined threshold, the plurality of nodes (11) comprising a first group of nodes (11), each node (11) of the first group of nodes (11) being allocated to a first job, the method comprising:
- Obtaining (110) a first label associated with the first job, said first label indicating a type of the first job, the first job type being one of a memory-type job, a compute-type job or a mixed-type job;
- Determining (120) a first capping value based on the obtained label, the first capping value being equal to a predefined value dependent on the type of the first job indicated by the label;
- Commanding (130) a capping enforcement of the power supplied to each node (11) of the first group of nodes (11), the power capping being enforced to the determined first capping value for each node (11) of the first group of nodes (11).

2. Method according to claim 1, further comprising, when a sum of values of the power capping of all the nodes (11) of the plurality of nodes (11) of the high-performance computer is strictly superior to the predefined threshold:
- Commanding (150) a power capping increase enforcement of the power supplied to one or more nodes (11) of the plurality of nodes (11) of the high-performance computer that do not belong to the first group of nodes (11).

3. Method according to claim 2, comprising :
- Obtaining (145) a list of categories of allocation of the nodes (11), said list of categories being in a predefined order, the predefined order being:
• The nodes (11) of the plurality of nodes (11) of the high-performance computer that are unallocated;
• The nodes (11) of the plurality of nodes (11) of the high-performance computer that do not belong to the first group of nodes (11) and that are allocated to a memory-type job;
• The nodes (11) of the plurality of nodes (11) of the high-performance computer that do not belong to the first group of nodes (11) and that are allocated to a mixed-type job;
• The nodes (11) of the plurality of nodes (11) of the high-performance computer that do not belong to the first group of nodes (11) and that are allocated to a compute-type job;
wherein the one or more nodes (11) of the plurality of nodes (11) of the high-performance computer on which the power capping increase enforcement is commanded are selected in the list of categories of the nodes (11) allocation following the predefined order, until the sum of values of the power capping of all the nodes (11) of the plurality of nodes (11) of the high-performance computer is inferior to the predefined threshold.

4. Method according to claim 3, wherein within each category of the list of categories, the nodes (11) of the plurality of nodes (11) are ordered following an ascending order of the number of said categories nodes (11) that is allocated to each job of said category.

5. Method according to claims 3 or 4, wherein, for each of the one or more nodes (11) of the plurality of nodes (11) of the high-performance computer on which the power capping increase enforcement is commanded, the power capping increase reduces the power capping value of said node (11) to a second value, the second value being dependent on the category of the node (11) according to the list of categories of the nodes (11) allocation.

6. Method according to any of claim 2 to 4, wherein, for each of the one or more nodes (11) of the plurality of nodes (11) of the high-performance computer on which the capping decrease enforcement is commanded, the power capping increase reduces the power capping value of said node (11) to a minimal operating power value, the minimal operating power value being dependent on said node (11).

7. Method according to any of the preceding claims, wherein the predefined value is determined:
- Via a table of values associating a job type with at least one corresponding predefined value; or
- Based on a first stochastic model built from collected data relating to the execution of previous jobs similar to the first job.

8. Method according to any of the preceding claims, wherein the first label is determined :
- By a user requesting the computation of the first job;
- Based on a history of previous jobs labels, the previous jobs being similar to the first job; and/or
- Based on a second stochastic model built from collected data relating to the execution of previous jobs similar to the first job.

9. Device (13) for capping the power consumption of a high-performance computer (10), configured to implement the method (110) according to any of the preceding claims.

10. High-performance computer (10), comprising:
- A plurality of nodes (11);
- A scheduler (12), connected to the plurality of nodes (11) and configured to allocate nodes (11) to jobs and to schedule the execution of said jobs;
- The device (13) for capping the power consumption of the high-performance computer according to claim 9, the device being connected to the scheduler (12) and to the plurality of nodes (11).

11. High-performance computer (10) according to claim 10, further comprising a history module (14) configured to:
- Store a history of previous jobs labels, the previous jobs being similar to the first job; and/or to
- Store collected data that relates to the execution of previous jobs similar to the first job and to build a stochastic model based on said collected data.

12. Computer program product comprising instructions which, when the program is executed by a computer, causes the computer to carry out the method (100) according to claims 1 to 8.

13. Computer-readable medium comprising instructions which, when executed by a computer, cause the computer to carry out the method (100) according to claims 1 to 8.
